# EUROPÄISCHE PATENTSCHRIFT

(11) **EP 2 379 387 B1**
(45) Veröffentlichungstag und Bekanntmachung des Hinweises auf die Patenterteilung: **10.10.2012**
(21) Anmeldenummer: 09748084.2
(22) Anmeldetag: 26.10.2009
(51) Int. Cl.: B60T 13/575

(54) **PNEUMATISCHER BREMSKRAFTVERSTÄRKER FÜR EINE FAHRZEUGBREMSANLAGE**
PNEUMATIC BRAKE BOOSTER FOR A VEHICLE BRAKE SYSTEM
AMPLIFICATEUR PNEUMATIQUE DE FORCE DE FREINAGE POUR UN SYSTÈME DE FREINAGE D'UN VÉHICULE

(30) Priorität: 19.12.2008 DE 102008064150; 20.10.2009 DE 102009045846
(43) Veröffentlichungstag der Anmeldung: 26.10.2011
(73) Patentinhaber: Continental Teves AG & Co. oHG, 60488 Frankfurt am Main (DE)
(72) Erfinder: FALLER, Jürgen, 63796 Kahl (DE)
(86) Internationale Anmeldenummer: PCT/EP2009/064049
(87) Internationale Veröffentlichungsnummer: WO 2010/069657

(56) Entgegenhaltungen:
- EP-A2- 1 090 822
- US-A- 5 943 938
- US-B1- 6 422 124

## Beschreibung

Die Erfindung betrifft einen pneumatischen Bremskraftverstärker für eine Fahrzeugbremsanlage mit einer mechanischen Bremsassistenten-Funktion gemäß dem Oberbegriff des Patentanspruchs 1.

Ein gattungsgemäßer Bremskraftverstärker mit mechanischer Bremsassistenten-Funktion ist aus EP 1 028 877 A1 bekannt. Das Kraftübersetzungsverhältnis des bekannten Bremskraftverstärkers wird durch das Verhältnis Ausgangswirkfläche zu Eingangswirkfläche definiert, wobei als Ausgangswirkfläche ein Durchmesser des Ausgangsgliedes und als Eingangswirkfläche ein Durchmesser des Druckstückes wirksam werden.

Von der Automobilindustrie bestehen Forderungen nach Bremskraftverstärkern mit höheren Übersetzungen. Da die Grenze der Übersetzung jedoch durch die Dimensionierung der Bauteile des Bremskraftverstärkers festgelegt ist, kann bei bekannten Bremskraftverstärkern eine Vergrößerung der Übersetzung nicht ohne negative Auswirkungen in Hinblick auf die Funktionsfähigkeit der Bauteile oder eine Vergrößerung des gesamten Bremskraftverstärkers umgesetzt werden.

Daher ist es Aufgabe der Erfindung, einen pneumatischen Bremskraftverstärker in Single- oder Tandem-Bauweise mit mechanischer Bremsassistenten-Funktion bereitzustellen, welcher bei gleichbleibender Gesamtdimensionierung und Gewährleistung der Bauteilfunktionsfähigkeit ein im Vergleich zu bekannten Bremskraftverstärkern höheres Kraftübersetzungsverhältnis aufweist.

Diese Aufgabe wird erfindungsgemäß dadurch gelöst, dass das Druckstück mehrteilig ausgebildet ist und ein erstes scheibenförmiges Bauteil und ein zweites scheibenförmiges Bauteil aufweist, wobei das zweite Bauteil an dem ersten Bauteil geführt vorgesehen ist. Hierdurch können den beiden scheibenförmigen Bauteilen unterschiedliche Funktionen zukommen, ohne dass deren Funktionsfähigkeit in Frage gestellt werden muss und ohne dass eine Vergrößerung der Dimensionierung notwendig ist.

Vorzugweise weist das zweite scheibenförmige Bauteil einen Führungszapfen auf, welcher in einer Bohrung des ersten scheibenförmigen Bauteils geführt wird, wodurch eine sichere Führung gewährleistet werden kann.

Gemäß einer vorteilhaften Ausführung der Erfindung weist die Hülse auf ihrer Innenseite eine Vertiefung auf, in welche das zweite scheibenförmige Bauteil mit einem Bund eintauchen kann, wobei zwischen dem Bund und der Vertiefung in unbetätigter Stellung des Bremskraftverstärkers der Abstand ausgebildet ist. Dieser Abstand bildet das so genannte z-Maß, welches bekanntermaßen das Verhalten des Bremskraftverstärkers in der Anfangsphase seiner Betätigung bestimmt und einen sprunghaften Anstieg der Ausgangskraft bzw. des Ausgangsdruckes bei der Betätigung des Bremskraftverstärkers mit einer vorher festgelegten Eingangskraft ermöglicht (Springereffekt). Der Bund des zweiten scheibenförmigen Bauteils kann so unabhängig von dem ersten scheibenförmigen Bauteil dimensioniert sein und eine Übertragung der Reaktionskraft auf das Eingangsglied ohne eine Einschränkung der Funktionsfähigkeit gewährleisten.

Um die Montage des ersten scheibenförmigen Bauteils zu erleichtern, weist das zweite scheibenförmige Bauteil vorzugsweise einen ersten, dem ersten scheibenförmigen Bauteil zugewandten zylindrischen Ansatz auf, an welchem der Führungszapfen angeformt ist und der eine Führung des zweiten scheibenförmigen Bauteiles in der Übersetzungsscheibe erlaubt.

Um ein Verkanten des zweiten scheibenförmigen Bauteils an der Übersetzungsscheibe zu verhindern, weist der erste zylindrische Ansatz gemäß einer vorteilhaften Ausführungsform der Erfindung eine Einführschräge auf.

Vorzugsweise weist das zweite scheibenförmige Bauteil einen zweiten, dem ersten scheibenförmigen Bauteil abgewandten zylindrischen Ansatz auf, welcher eine Führung der Feder erlaubt.

Zur verbesserten Montage des zweiten scheibenförmigen Bauteiles weist auch der zweite zylindrische Ansatz eine Einführschräge auf.

Weitere Merkmale und Vorteile der Erfindung werden in der nachfolgenden Beschreibung unter Bezugnahme auf die beiliegende Zeichnung näher erläutert, welche einen bekannten Bremskraftverstärker und ein erfindungsgemäßes Ausführungsbeispiel zeigt. Es zeigt stark schematisiert jeweils im Längsschnitt:
- Figur 1: einen Ausschnitt eines bekannten Bremskraftverstärkers gemäß EP 1 028 877 A1;
- Figur 2: einen vergrößerten Ausschnitt einer Bremsassistent-Schalteinheit des bekannten Bremskraftverstärkers gemäß Fig. 1;
- Figur 3: einen Ausschnitt eines erfindungsgemäßen Bremskraftverstärkers in einer Bereitschaftsstellung;
- Figur 4: den Ausschnitt gemäß Fig. 3 in einer Vollbremsstellung und
- Figur 5: den Ausschnitt gemäß Fig. 3 im Rücklauf.

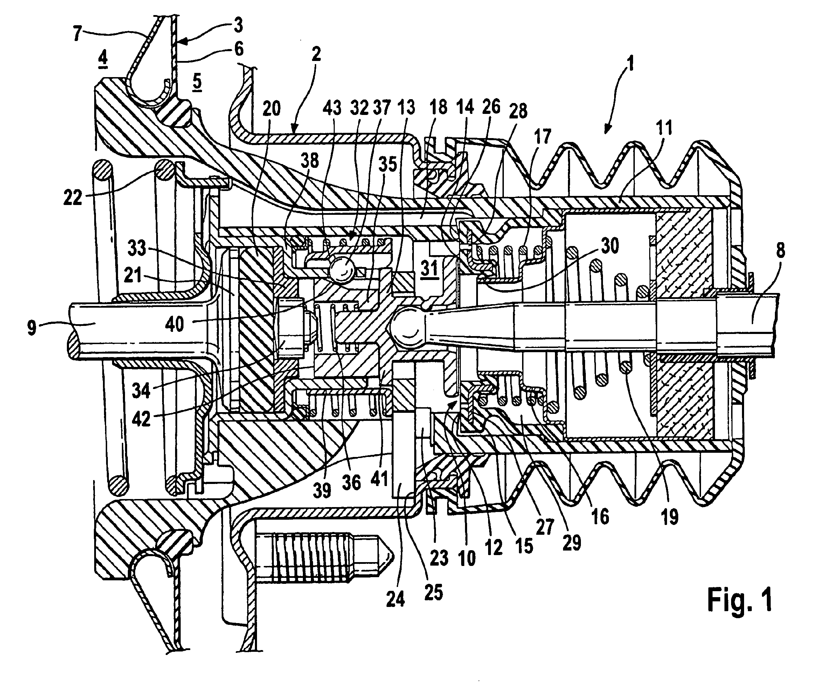

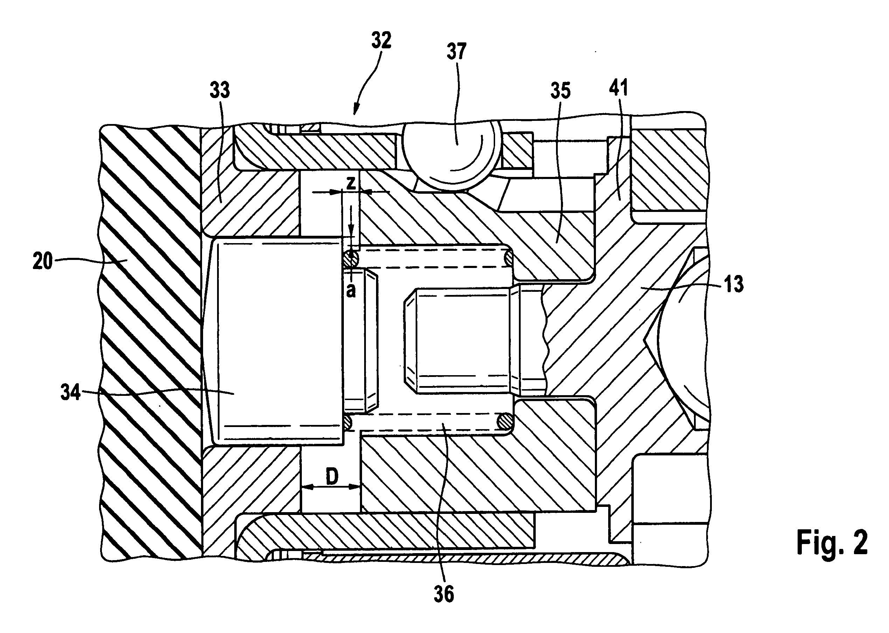

Fig. 1 und 2 zeigen einen Ausschnitt eines aus der EP 1 028 877 A1 bekannten Bremskraftverstärkers, auf welche insbesondere in Hinblick auf die Bremsassistenten-Funktion und den Aufbau des Bremskraftverstärkers Bezug genommen wird.

Die gezeichnete Steuereinheit des bekannten Bremskraftverstärkers 1, der als Single- oder Tandem-Gerät ausgestaltet sein kann, dient zur Steuerung und Regelung des Übersetzungsverhältnisses in einer Kraftfahrzeugbremsanlage. Der Bremskraftverstärker 1 umfasst darüber hinaus ein nur angedeutetes Verstärkergehäuse 2, welches durch eine axial bewegliche Wand 3 in eine Unterdruckkammer 4 und in eine Arbeitskammer 5 unterteilt ist. Die bewegliche Wand 3 besteht aus einem Membranteller 7 und einer daran anliegenden flexiblen Membran 6, die an einem äußeren Umfang des Membrantellers 7 und dem Verstärkergehäuse 2 eine Rollmembran als Abdichtung bildet. Weiterhin umfasst der Bremskraftverstärker 1 als Eingangsglied 8 eine Betätigungsstange und als Ausgangsglied 9 eine Druckstange, welche beispielsweise auf einen nicht gezeichneten hydraulischen Hauptbremszylinder wirkt. Ein durch das Eingangsglied 8 betätigbares Steuerventil 10 ist in einem, in dem Verstärkergehäuse 2 abgedichtet geführten, die bewegliche Wand 3 tragenden Steuergehäuse 11 untergebracht und besteht aus einem am Steuergehäuse 11 ausgebildeten ersten Dichtsitz 12, einem an einem mit dem Eingangsglied 8 verbundenen Ventilkolben 13 ausgebildeten zweiten Dichtsitz 14 sowie einem mit beiden Dichtsitzen 12,14 zusammenwirkenden, in dem Steuergehäuse 11 abgedichtet angeordneten Ventilkörper 15, der mittels einer sich an einem Ventilhalter 16 abstützenden Ventilfeder 17 gegen die Dichtsitze 12,14 gedrückt wird. Die Arbeitskammer 5 ist mit der Unterdruckkammer 4 über einen seitlich im Steuergehäuse 11 verlaufenden Kanal 18 verbindbar.

Die Bremskraft wird über ein gummielastisches Reaktionselement 20 übertragen. Der Kraftfluss erfolgt weiter über die als Ausgangsglied 9 wirkende Druckstange mit dem Kopfflansch 21 auf einen Betätigungskolben des nicht gezeichneten Hauptbremszylinders der Kraftfahrzeugbremsanlage, welcher vorzugsweise an der unterdruckseitigen Verstärkergehäusehälfte angebracht ist.

Eine Rückstellfeder 22, die sich an der unterdruckseitigen Stirnwand des Verstärkergehäuses 2 abstützt, hält die bewegliche Wand 3 in der Ausgangsstellung. Außerdem ist eine zweite Druckfeder bzw. Betätigungsstangenrückstellfeder 19 vorgesehen, die einerseits indirekt an der Betätigungsstange und andererseits am Ventilhalter 16 abgestützt ist und deren Kraft für eine Vorspannung des Ventilkolbens 13 bzw. seines Dichtsitzes 14 gegenüber dem Ventilkörper 15 sorgt.

Um die Arbeitskammer bei der Betätigung des Steuerventils 10 mit der Atmosphäre verbinden zu können, ist schließlich im Steuergehäuse 11 ein annähernd radial verlaufender Kanal 23 ausgebildet. Die Rückkehrbewegung des Ventilkolbens 13 am Ende eines Bremsvorganges wird dabei durch ein Querglied 24 begrenzt, das an einem dem Verstärkergehäuse 25 ausgebildeten Anschlag 25 anlegbar ist.

Wie der Zeichnung weiter zu entnehmen ist, weist der Ventilkörper 15 eine mit den beiden Dichtsitzen 12,14 zusammenwirkende ringförmige Dichtfläche 26 auf, die mittels einer metallischen Versteifungsscheibe 27 versteift und mit mehreren axialen Durchlässen 28 versehen ist. Außerdem weist der Ventilkörper 15 eine radial innen ausgebildete Dichtlippe 30 auf, die im montierten Zustand des Ventilkörpers 15 im Steuergehäuse 11 an dem Ventilhalter 16 dichtend anliegt, so dass im Steuergehäuse 11 ein pneumatischer Raum 29 begrenzt ist. Die durch die Durchlässe 28 und Öffnungen in der Dichtfläche 26 gebildeten, näher nicht bezeichneten Strömungskanäle verbinden den pneumatischen Raum 29 mit einem durch die Dichtsitze 12,14 begrenzten Ringraum 31, in den der oben erwähnte Kanal 23 mündet, so dass der auf der der Dichtfläche 26 abgewandten Seite des Ventilkörpers 15 ausgebildete pneumatische Raum 29 ständig mit der Arbeitskammer 5 in Verbindung steht und am Ventilkörper 15 ein Druckausgleich stattfindet.

Im Bereich eines Reaktionselementes 20 ist eine Bremsassistent-Schalteinheit 32 angeordnet, welche ein axial bewegbares, in einer Übersetzungsscheibe 33 geführtes Druckstück 34 umfasst. Bei einer Normalbremsung stützt sich dieses Druckstück 34 über eine Hülse 35 der Bremsassistent-Schalteinheit 32 mittelbar an dem Eingangsglied 8 bzw. an dem Ventilkolben 13 oder während einer Notbremsung über die Hülse 35 mittelbar an dem Steuergehäuse 11 ab und ermöglicht dadurch eine Änderung des Kraftübersetzungsverhältnisses i, welches sich durch das Verhältnis Ausgangswirkfläche zu Eingangswirkfläche definiert, wobei als Ausgangswirkfläche ein Durchmesser des Ausgangsgliedes 9 bzw. dessen Kopfflansches 21 und als Eingangswirkfläche ein Durchmesser des Druckstückes 34 wirksam werden.

Das Druckstück 34 und die Hülse 35 werden in einer unbetätigten Stellung des Bremskraftverstärkers 1 mittels einer Feder 36 auf Abstand z gehalten. Dieser Abstand z bildet das so genannte z-Maß, welches bekanntermaßen das Verhalten des Bremskraftverstärkers 1 in der Anfangsphase seiner Betätigung bestimmt und einen sprunghaften Anstieg der Ausgangskraft bzw. des Ausgangsdruckes bei der Betätigung des Bremskraftverstärkers 1 mit einer vorher festgelegten Eingangskraft ermöglicht (Springereffekt).

Das Druckstück 34 ist, wie nachfolgend ausgeführt wird, für eine Vergrößerung der Verstärkung in Abhängigkeit von einer Relativbewegung zwischen dem Eingangsglied 8 bzw. dem Ventilkolben 13 und dem Steuergehäuse 11 mittels eines Kopplungselements 37 mit dem Steuergehäuse 11 lösbar verbindbar.

Das Kopplungselement 37 wird im Wesentlichen aus einem oder mehreren kugelförmigen Wälzkörpern gebildet, welche in einem Haltekorb 38 in axialer Richtung festgehalten, aber in radialer Richtung grundsätzlich bewegbar angeordnet sind. Der Haltekorb 38 ist an dem Steuergehäuse 11 angelegt oder befestigt und besteht vorzugsweise aus Blechwerkstoff, welcher durch Stanzoperationen und umformtechnischer Maßnahmen in eine abgestuft hülsenförmige Korbform vergleichbar einem Wälzlagerring gebracht wird.

Nach radial außen begrenzt eine weitere, federvorgespannte Hülse 39 die Bewegbarkeit des Kopplungselements 37 derart, dass es nicht aus der axialen Begrenzung des Haltekorbes 38 rutschen kann. Radial innen bezogen auf das Kopplungselement 37 ist eine Steuerkontur 40, vorzugsweise mit Rampenform vorgesehen, welche sich am Umfang der Hülse 35 befindet, die den am Eingangsglied 8 befestigten Ventilkolben 13 konzentrisch umgreift. Die Rampenform mit einer Schräge bewirkt einen linearen Zusammenhang zwischen axialer Verschiebung der Hülse 35 relativ zu dem Steuergehäuse 11 und der bewirkten radialen Verschiebung des Kopplungselements 37.

Die Hülse 35 ist relativ zu dem Ventilkolben 13 bewegbar, und das vordere Ende des Ventilkolbens 13 greift mit einem Zapfen derart in die Hülse 35 ein, dass diese gewissermaßen auf dem Zapfen geführt ist. Bei Betätigung legt sich die Hülse 35 axial an einen Kragen 41 des Ventilkolbens 13 an.

Andererseits kommt bei der Betätigung des Bremskraftverstärkers 1 eine Stirnfläche 42 der Hülse 35 zur Anlage an dem Druckstück 34, so dass unter Zwischenschaltung der Hülse 35 die Betätigungskraft auf das Druckstück 34 übertragen werden kann. Im gleichen Maße kommt es zu einer unmittelbaren Weitergabe der Gegenkraft an den Fahrer. In diesem Zustand kommt dem Kopplungselement 37, das noch an der Steuerkontur 40 anliegt keine Funktion zu, und das Druckstück 34 ist über die Hülse 35 am Ventilkolben 13 abgestützt. Dieser Zustand bleibt auch bei einer langsamen Betätigung des Bremskraftverstärkers 1 erhalten, wobei keine oder nur geringe Relativverschiebungen zwischen dem Eingangsglied 8 und dem am Steuergehäuse 11 festgelegten Haltekorb 38 vorliegen.

Eine sehr schnelle Betätigung des Eingangsglieds 8 mit entsprechender Relativverschiebung zwischen Eingangsglied 8 und Steuergehäuse 11, respektive Haltekorb 38 führt zu einer Verschiebung der Hülse 35 mitsamt Steuerkontur 40 in Richtung Reaktionselement 20. Infolgedessen gleitet das Kopplungselement 37 an einem Vorsprung 43 der Hülse 39 derart ab, dass es von seiner radial äußeren Ausgangsstellung (auf der Steuerfläche) in eine radial innere Betätigungsstellung geschoben wird. Weil nun das Kopplungselement 37 einerseits in dem Haltekorb 38 axial festgelegt ist, und andererseits formschlüssig an der Steuerkontur 40 der Hülse 35 angreift, ist das Kopplungselement 37 eingekuppelt. Die Rückwirkungskraft des Bremssystems wird gewissermaßen über das Druckstück 34, die Hülse 35, das Kopplungselement 37 sowie den Haltekorb 38 von dem Steuergehäuse 11 aufgenommen, ohne dass es zwangsläufig zu einer Rückwirkung dieser Bremsreaktionskraft auf den Fahrer kommt. Infolgedessen wird der Fahrer kräftemäßig entkoppelt, mit anderen Worten von der Rückwirkung größerer Kräfte abgetrennt. Der Fahrer kann nun das Steuerventil 10 frei und unabhängig von großen Fußkräften (Reaktionskräften) regeln, so dass entsprechend der eingesteuerten Belüftung der entsprechende Radbremsdruck eingesteuert werden kann.

Der Auskuppelvorgang geschieht durch Zurücknehmen des Eingangsglieds 8, so dass das Steuerventil 10 geschlossen und die eingesteuerte Verstärkungskraft zurückgenommen wird. Die Bremsassistent-Schalteinheit 32 bleibt allerdings noch immer eingekuppelt. Der Auskuppelvorgang beginnt erst, wenn der Ventilkolben 13 derart weit zurückgenommen wird, dass er mit dem Kragen 41 an dem quer durch das Steuergehäuse 11 gestreckten Querglied 24 anschlägt, zu dem der Ventilkolben 13 begrenzt frei bewegbar ist. Nach der Anlage des Kragens 41 an dem Querglied 24 wird dieses bei fortgesetzter Rückzugsbewegung in Richtung des Anschlags 25 am Verstärkergehäuse 2 mitgenommen und liegt schließlich an diesem an, so dass die Rückführbewegung begrenzt ist. Weil einerseits die Vorspannung der Hülse 39 erschöpft ist (der Vorsprung 43 drängt den Wälzkörper 37 nicht mehr in die radial innere Kopplungsstellung) und andererseits die zusammen mit dem Ventilkolben 13 zurückstrebende Steuerkontur 40 das Kopplungselement 37 nach radial außen drückt, strebt das Kopplungselement 37 nach radial außen in die entkuppelte Ausgangsstellung. Damit ist der Kupplungszustand aufgehoben, kann jedoch grundsätzlich jederzeit wiederholt werden.

Wie bereits oben ausgeführt, ist das Kraftübersetzungsverhältnis i durch das Verhältnis Ausgangswirkfläche zu Eingangswirkfläche definiert. Somit ist bei dem bekannten Bremskraftverstärker 1 gemäß den Fig. 1 und 2 als Ausgangswirkfläche ein Durchmesser des Ausgangsgliedes 9 bzw. dessen Kopfflansches 21 und als Eingangswirkfläche ein Durchmesser des Druckstückes 34 wirksam.

Die bekannten maximalen Übersetzungen werden somit durch den Durchmesser des Druckstückes 34 bestimmt, da das Druckstück eine bestimmte minimale Anlagefläche a an der Hülse 35 aufweisen muss, damit bei Aufnahme von Reaktionskräften eine maximal zulässige Flächenpressung nicht überschritten wird.

Daher liegt die Grenze der Übersetzungen bei bekannten Single-Bremskraftverstärkern bei i=~8,0ₜₕₑₒᵣ. bzw. bei bekannten Tandem-Bremskraftverstärkern bei i=~9,6_{theor.}.

Die Grenze der Übersetzung ist durch die Dimensionierung der Bauteile des Bremskraftverstärkers 1 festgelegt, so dass bei diesen eine Vergrößerung der Übersetzung nicht ohne negative Auswirkungen in Hinblick auf die Funktionsfähigkeit der Bauteile oder eine Vergrößerung des gesamten Bremskraftverstärkers 1 umgesetzt werden kann.

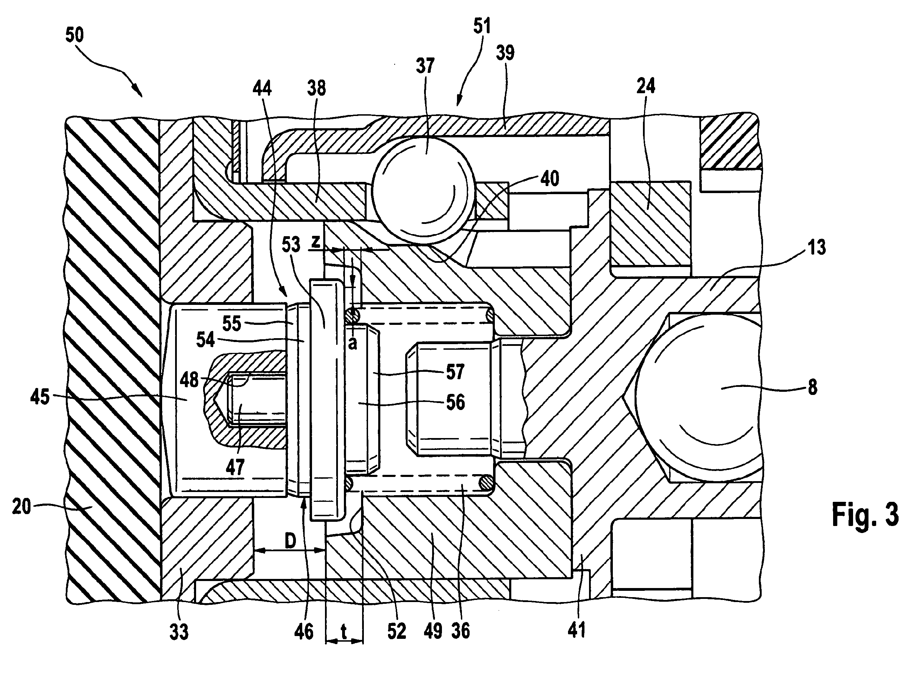

Um die von der Automobilindustrie bestehen Forderungen nach Bremskraftverstärkern mit höheren Übersetzungen erfüllen zu können und einen pneumatischen Bremskraftverstärker in Single- oder Tandem-Bauweise mit mechanischer Bremsassistenten-Funktion bereitzustellen, welcher bei gleichbleibender Gesamtdimensionierung und Gewährleistung der Bauteilfunktionsfähigkeit eine im Vergleich zu bekannten Bremskraftverstärkern höhere Übersetzung aufweist, weist ein erfindungsgemäßer Bremskraftverstärker 50, der in den Fig. 3 bis 5 in unterschiedlichen Betriebszuständen dargestellt ist, ein mehrteiliges Druckstück 44 mit einem ersten scheibenförmigen Bauteil 45 und einem zweiten scheibenförmigen Bauteil 46 auf.

Der erfindungsgemäße Bremskraftverstärker 50 unterscheidet sich lediglich in der Ausgestaltung der Bremsassistent-Schalteinheit 51, so dass nachgehend nur auf die Unterschiede zum bekannten Bremskraftverstärker 1 gemäß den Fig. 1 und 2 eingegangen wird. Gleiche Bauteile sind mit dem gleichen Bezugszeichen versehen.

Wie insbesondere Fig. 3 zu entnehmen ist, welche den Bremskraftverstärker 50 in einer Bereitschaftsstellung zeigt, ist das zweite Bauteil 46 an dem ersten Bauteil 45 geführt vorgesehen. Hierzu weist das zweite Bauteil 46 einen mittig angeordneten Führungszapfen 47 auf, welcher in einer mittig angeordneten Bohrung 48 des ersten Bauteils 45 geführt wird.

Die Zweiteilung des Druckstückes 44 erlaubt eine Aufteilung der unterschiedlichen Funktionen, so dass den beiden scheibenförmigen Bauteilen 45,46 unterschiedliche Aufgaben zukommen können, ohne dass deren Funktionsfähigkeit in Frage gestellt werden muss und ohne dass eine Vergrößerung der Dimensionierung notwendig ist. Beispielsweise kann der Durchmesser des ersten Bauteiles 45 zur Vergrößerung des Übersetzungsverhältnisses i verkleinert werden, ohne dass die festgelegte minimale Anlagefläche a an einer Hülse 49 reduziert werden muss, wodurch auch bei Aufnahme von Reaktionskräften eine maximal zulässige Flächenpressung an dieser Stelle nicht überschritten wird.

Die Hülse 49 entspricht in ihrer Funktion und ihrer wesentlichen Ausgestaltung der Hülse 35 gemäß den Fig. 1 und 2. Sie unterscheidet sich dadurch, dass auf ihrer Innenseite eine Vertiefung 52 mit der Tiefe t vorgesehen ist, in welche das zweite scheibenförmige Bauteil 46 mit einem Bund 53 eintauchen kann, wobei zwischen dem Bund 53 und der Vertiefung 52 in unbetätigter Stellung des Bremskraftverstärkers 50 der Abstand z ausgebildet ist, welcher das beschriebene z-Maß bildet. Der Bund 53 des zweiten scheibenförmigen Bauteils 46 kann unabhängig von dem ersten scheibenförmigen Bauteil 45 dimensioniert sein und eine Übertragung der Reaktionskraft über die Hülse 49 auf den Ventilkolben 13 ohne eine Einschränkung der Funktionsfähigkeit gewährleisten.

Um die Montage des ersten scheibenförmigen Bauteils 45 zu erleichtern, weist das zweite scheibenförmige Bauteil 46 einen ersten, dem ersten scheibenförmigen Bauteil 45 zugewandten zylindrischen Ansatz 54 auf, an welchem der Führungszapfen 47 angeformt ist und der eine Führung des zweiten scheibenförmigen Bauteiles 46 in der Übersetzungsscheibe 33 erlaubt. Das erste Bauteil 46 kann damit ohne Schwierigkeiten lagerichtig montiert werden.

Weiter weist der erste zylindrische Ansatz 54 eine Einführschräge 55 auf, um ein Verkanten des zweiten scheibenförmigen Bauteils 46 an der Übersetzungsscheibe 33 zu verhindern.

Ein zweiter, dem ersten scheibenförmigen Bauteil 45 abgewandter zylindrischer Ansatz 56 mit einer Einführschräge 57 erlaubt eine sichere Führung der Feder 36, wobei die Einführschräge 57 die Montage der Feder 36 verbessert.

Die beschriebene Ausgestaltung der Bremsassistent-Schalteinheit 51 weist den Vorteil auf, dass ein in den Fig. 2 und 3 gezeigtes Maß D, d.h. der Abstand zwischen der Hülse 49 und der Übersetzungsscheibe 33 konstruktiv nicht verändert werden muss.

Durch den Bund 53 kann die Bremsassistent-Schalteinheit 51 teilweise als vormontierte Einheit vorgesehen werden, die in den Bremskraftverstärker 51 eingesetzt wird. Nach dem Einsatz dieser Baugruppe kann das erste Bauteil 45 in die Übersetzungsscheibe 33 bzw. auf das zweite Bauteil 46 wie oben beschrieben geführt montiert werden.

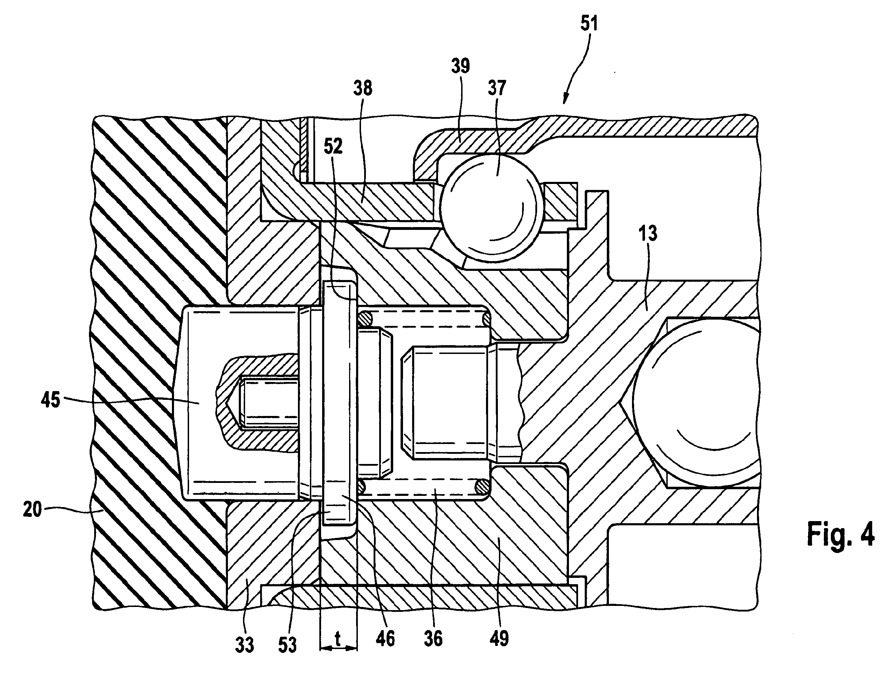

Fig. 4 zeigt den erfindungsgemäßen Bremskraftverstärker 51 in einer Vollbremsstellung. Es ist ersichtlich, dass dabei die Hülse 49 an der Übersetzungsscheibe 33 anliegt und der Bund 53 von der Vertiefung 52 aufgenommen wird.

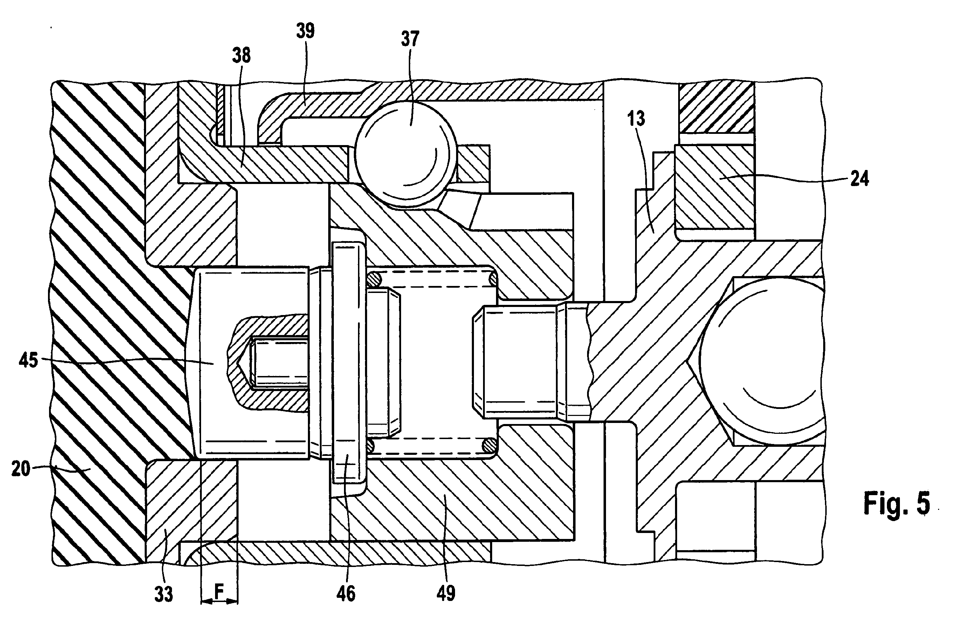

Im Rücklauf, welcher in Fig. 5 dargestellt ist, ist zwischen dem ersten Bauteil 45 und der Übersetzungsscheibe 33 noch genügend zylindrische Führung F vorhanden, um ein Verklemmen der Teile zu vermeiden.

### Bezugszeichenliste

- 1: Bremskraftverstärker
- 2: Verstärkergehäuse
- 3: Wand
- 4: Unterdruckkammer
- 5: Arbeitskammer
- 6: Membran
- 7: Membranteiller
- 8: Eingangsglied
- 9: Ausgangsglied
- 10: Steuerventil
- 11: Steuergehäuse
- 12: Dichtsitz
- 13: Ventilkolben
- 14: Dichtsitz
- 15: Ventilkörper
- 16: Ventilhalter
- 17: Ventilfeder
- 18: Kanal
- 19: Betätigungsstangenrückstellfeder
- 20: Reaktionselement
- 21: Kopfflansch
- 22: Rückstellfeder
- 23: Kanal
- 24: Querglied
- 25: Anschlag
- 26: Dichtfläche
- 27: Versteifungsscheibe
- 28: Durchlass
- 29: Raum
- 30: Dichtlippe
- 31: Ringraum
- 32: Bremsassistent-Schalteinheit
- 33: Übersetzungsscheibe
- 34: Druckstück
- 35: Hülse
- 36: Feder
- 37: Kopplungselement
- 38: Haltekorb
- 39: Hülse
- 40: Steuerkontur
- 41: Kragen
- 42: Stirnfläche
- 43: Vorsprung
- 44: Druckstück
- 45: Bauteil
- 46: Bauteil
- 47: Führungszapfen
- 48: Bohrung
- 49: Hülse
- 50: Bremskraftverstärker
- 51: Bremsassistent-Schalteinheit
- 52: Vertiefung
- 53: Bund
- 54: Ansatz
- 55: Einführschräge
- 56: Ansatz
- 57: Einführschräge

- a: Anlagefläche
- D: Maß D
- F: Führung
- i: Kraftübersetzungsverhältnis
- Z: z-Maß

## Patentansprüche

1. Pneumatischer Bremskraftverstärker (50) für eine Fahrzeugbremsanlage mit einem betätigbaren Eingangsglied (8), einem Ausgangsglied (9) zur Beaufschlagung insbesondere eines Hauptbremszylinders mit einer Verstärkungskraft und mit einem in einem Steuergehäuse (11) angeordneten Steuerventil (10) zur Regelung der Verstärkungskraft, wobei im Bereich eines Reaktionselementes (20) eine Bremsassistent-Schalteinheit (51) angeordnet ist, welche ein axial bewegbares, in einer Übersetzungsscheibe (33) geführtes Druckstück (44) umfasst, welches sich bei einer Normalbremsung über eine Hülse (49) der Bremsassistent-Schalteinheit (51) mittelbar an dem Eingangsglied (8) bzw. einem mit dem Eingangsglied (8) verbundenen Ventilkolben (13) oder während einer Notbremsung über die Hülse (49) der Bremsassistent-Schalteinheit (51) mittelbar an dem Steuergehäuse (11) abstützt und dadurch eine Änderung des Kraftübersetzungsverhältnisses (i) ermöglicht, wobei das Druckstück (44) und die Hülse (49) in einer in unbetätigter Stellung des Bremskraftverstärkers (50) mittels einer Feder (36) auf Abstand (z) gehalten werden und wobei das Druckstück (44) für eine Vergrößerung der Verstärkung in Abhängigkeit von einer Relativbewegung zwischen dem Eingangsglied (8) und dem Steuergehäuse (11) mittels eines Kopplungselements (37) mit dem Steuergehäuse (11) lösbar verbindbar ist, **dadurch gekennzeichnet, dass** das Druckstück (44) mehrteilig ausgebildet ist und ein erstes scheibenförmiges Bauteil (45) und ein zweites scheibenförmiges Bauteil (46) aufweist, wobei das zweite Bauteil (46) an dem ersten Bauteil (45) geführt vorgesehen ist.

2. Bremskraftverstärker (50) nach Anspruch 1, **dadurch gekennzeichnet, dass** das zweite scheibenförmige Bauteil (46) einen Führungszapfen (47) aufweist, welcher in einer Bohrung (48) des ersten scheibenförmigen Bauteils (45) geführt wird.

3. Bremskraftverstärker (50) nach Anspruch 2, **dadurch gekennzeichnet, dass** die Hülse (49) auf ihrer Innenseite eine Vertiefung (52) aufweist, in welche das zweite scheibenförmige Bauteil (46) mit einem Bund (53) eintauchen kann, wobei zwischen dem Bund (53) und der Vertiefung (52) in unbetätigter Stellung des Bremskraftverstärkers (50) der Abstand (z) ausgebildet ist.

4. Bremskraftverstärker (50) nach Anspruch 3, **dadurch gekennzeichnet, dass** das zweite scheibenförmige Bauteil (46) einen ersten, dem ersten scheibenförmigen Bauteil (45) zugewandten zylindrischen Ansatz (54) aufweist, an welchem der Führungszapfen (47) angeformt ist und der eine Führung des zweiten scheibenförmigen Bauteiles (46) in der Übersetzungsscheibe (33) erlaubt.

5. Bremskraftverstärker (50) nach Anspruch 4, **dadurch gekennzeichnet, dass** der erste zylindrische Ansatz (54) eine Einführschräge (55) aufweist.

6. Bremskraftverstärker (50) nach Anspruch 3 oder 4, **dadurch gekennzeichnet, dass** das zweite scheibenförmige Bauteil (46) einen zweiten, dem ersten scheibenförmigen Bauteil (45) abgewandten zylindrischen Ansatz (56) aufweist, welcher eine Führung der Feder (36) erlaubt.

7. Bremskraftverstärker (50) nach Anspruch 4, **dadurch gekennzeichnet, dass** der zweite zylindrische Ansatz (56) eine Einführschräge (57) aufweist.

## Claims

1. Pneumatic brake booster (50) for a vehicle brake system, with an actuable input member (8), with an output member (9) for acting, in particular, upon a brake master cylinder with a boosting force, and with a control valve (10), arranged in a control housing (11), for regulating the boosting force, there being arranged in the region of a reaction element (20) a brake assistance switching unit (51) which comprises an axially movable pressure piece (44) which is guided in a step-up disc (33) and which, during normal braking, is supported via a sleeve (49) of the brake assistance switching unit (51) indirectly on the input member (8) or on a valve piston (13) connected to the input member (8) or, during emergency braking, is supported via the sleeve (49) of the brake assistance switching unit (51) indirectly on the control housing (11) and which thereby makes it possible to change the force step-up ratio (i), the pressure piece (44) and the sleeve (49) being held with clearance (z) by means of a spring (36) in a non-actuated position of the brake booster (50), and, in order to increase boosting, the pressure piece (44) being releaseably connectable to the control housing (11) by means of a coupling element (37) as a function of relative movement between the input member (8) and the control housing (11), **characterized in that** the pressure piece (44) is in multi-part form and has a first disc-shaped component (45) and a second disc-shaped component (46), the second component (46) being provided so as to be guided on the first component (45).

2. Brake booster (50) according to Claim 1, **characterized in that** the second disc-shaped component (46) has a guide tenon (47) which is guided in a bore (48) of the first disc-shaped component (45).

3. Brake booster (50) according to Claim 2, **characterized in that** the sleeve (49) has on its inside a depression (52), into which the second disc-shaped component (46) can penetrate with a collar (53), the clearance (z) being formed between the collar (53) and the depression (52) in the non-actuated position of the brake booster (50).

4. Brake booster (50) according to Claim 3, **characterized in that** the second disc-shaped component (46) has a first cylindrical extension (54) which faces the first disc-shaped component (45) and on which the guide tenon (47) is integrally formed, and which enables the second disc-shaped component (46) to be guided in the step-up disc (33).

5. Brake booster (50) according to Claim 4, **characterized in that** the first cylindrical extension (54) has a lead-in slope (55).

6. Brake booster (50) according to Claim 3 or 4, **characterized in that** the second disc-shaped component (46) has a second cylindrical extension (56) which faces away from the first disc-shaped component (45) and which enables the spring (36) to be guided.

7. Brake booster (50) according to Claim 4, **characterized in that** the second cylindrical extension (56) has a lead-in slope (57).

## Revendications

1. Amplificateur pneumatique (50) de force de freinage pour installation de freinage de véhicule, l'amplificateur présentant :
un organe d'entrée (8) apte à être activé,
un organe de sortie (9) qui applique en particulier sur le cylindre principal de freinage une force d'amplification et
une soupape pilote (10) disposée dans un boîtier pilote (11) et destinée à réguler la force d'amplification,
une unité (51) de commutation de l'assistance au freinage étant disposée au niveau d'un élément de réaction (20) et comportant une pièce de poussée (44) déplaçable axialement, guidée dans une plaque de conversion (33) et qui lors d'un freinage normal, s'appuie indirectement par une douille (49) de l'unité (51) de commutation de l'assistance au freinage sur l'organe d'entrée (8) ou sur un piston de soupape (13) relié à l'organe d'entrée (8) ou, lors d'un freinage d'urgence, s'appuie indirectement par l'intermédiaire de la douille (49) de l'unité (51) de commutation de l'assistance au freinage sur le boîtier pilote (11), en permettant ainsi de modifier le rapport (i) de conversion de force,
la pièce de poussée (44) et la douille (49) étant maintenues à une distance (z) au moyen d'un ressort (36) lorsque l'amplificateur (50) de force de freinage est en position non activée,
la pièce de poussée (44) pouvant être reliée de manière libérable au boîtier pilote (11) au moyen d'un élément d'accouplement (37) en vue d'augmenter l'amplification en fonction d'un déplacement relatif entre l'organe d'entrée (8) et le boîtier pilote (11), **caractérisé en ce que**
la pièce de poussée (44) est réalisée en plusieurs pièces et présente un premier composant (45) en forme de plaque et un deuxième composant (46) en forme de plaque, le deuxième composant (46) étant prévu pour être guidé sur le premier composant (45).

2. Amplificateur (50) de force de freinage selon la revendication 1, **caractérisé en ce que** le deuxième composant (46) en forme de plaque présente un tourillon de guidage (47) qui est guidé dans un alésage (48) ménagé dans le premier composant (45) en forme de plaque.

3. Amplificateur (50) de force de freinage selon la revendication 2, **caractérisé en ce que** la douille (49) présente sur son côté intérieur un renfoncement (52) dans lequel le deuxième composant (46) en forme de plaque peut s'enfoncer par un collet (53), la distance (z) étant formée entre le collet (53) et le renfoncement (52) lorsque l'amplificateur (50) de force de freinage est en position non activée.

4. Amplificateur (50) de force de freinage selon la revendication 3, **caractérisé en ce que** le deuxième composant (46) en forme de plaque présente un premier appendice cylindrique (54) tourné vers le composant (45) en forme de plaque et sur lequel le tourillon de guidage (47) est formé, et qui permet de guider le deuxième composant (46) en forme de plaque dans le disque de conversion (33).

5. Amplificateur (50) de force de freinage selon la revendication 4, **caractérisé en ce que** le premier appendice cylindrique (54) présente une pente d'insertion (55).

6. Amplificateur (50) de force de freinage selon les revendications 3 ou 4, **caractérisé en ce que** le deuxième composant (46) en forme de plaque présente un deuxième appendice cylindrique (56) non tourné vers le premier composant (45) en forme de plaque et qui permet de guider le ressort (36).

7. Amplificateur (50) de force de freinage selon la revendication 4, **caractérisé en ce que** le deuxième appendice cylindrique (56) présente une pente d'insertion (57).
